# EUROPÄISCHE PATENTANMELDUNG

(11) **EP 4 570 989 A1**
(43) Veröffentlichungstag der Anmeldung: **18.06.2025**
(21) Anmeldenummer: 24219162.5
(22) Anmeldetag: 11.12.2024
(51) Int. Cl.: E01C 23/088

(54) **SELBSTFAHRENDE STRASSENBAUMASCHINE, INSBESONDERE BODENFRÄSMASCHINE, UND VERFAHREN ZUM BEREITSTELLEN EINER WETTERSCHUTZEINRICHTUNG EINER STRASSENBAUMASCHINE**

(30) Priorität: 13.12.2023 DE 102023135042
(71) Anmelder: BOMAG GmbH, 56154 Boppard (DE)
(72) Erfinder: Thelen, Thomas, Boppard (DE); Dzomo, Gerome, Boppard (DE); Stahl, Steffen, Boppard (DE); Dupont, Alice, Boppard (DE)
(74) Vertreter: Zimmermann & Partner Patentanwälte mbB

(57) **Zusammenfassung**

Selbstfahrende Straßenbaumaschine (1), insbesondere Bodenfräsmaschine, umfassend einen Antriebsaggregat (2), einen Maschinenrahmen (3), mit dem Maschinenrahmen (3) verbundene vordere und hintere Fahreinrichtungen (4), sowie einen Fahrstand (5) mit einer Wetterschutzeinrichtung (6), wobei die Wetterschutzeinrichtung (6) eine Dachwand (7), eine Frontwand (8), eine Heckwand (9) sowie zwei einander gegenüberliegende Seitenwände (10) umfasst und die Seitenwände (10) jeweils ein in der Wetterschutzstellung gemeinsam eine Seitenwand (10) bildendes Seitenwandoberteil (11) und Seitenwandunterteil (12) umfassen, und dass das Seitenwandoberteil (11) und das Seitenwandunterteil (12) einer Seitenwand (10) in der Staustellung gegenüber ihrer Relativlage in der Wetterschutzstellung zueinander verlagert sind.

## Beschreibung

Die Erfindung betrifft eine selbstfahrende Straßenbaumaschine, insbesondere eine Bodenfräsmaschine, sowie ein Verfahren zum Bereitstellen einer Wetterschutzeinrichtung einer Straßenbaumaschine.

Selbstfahrende Straßenbaumaschinen sind Maschinen, die im Straßen- und Wegebau verwendet werden und sich im Arbeitsbetrieb durch einen eigenen Fahrantrieb bewegen. Derartige Straßenbaumaschinen sind beispielsweise in der EP4074894A1 beschrieben. Zu den Straßenbaumaschinen der vorliegend relevanten Art gehören insbesondere Bodenfräsmaschinen, ganz besonders Straßenfräsmaschinen. Derartige Maschinen umfassen neben einem Antriebsaggregat, das insbesondere die für den Fahr- und Arbeitsbetrieb benötigte Antriebsenergie bereitstellt und beispielsweise ein Verbrennungs- oder Elektromotor sein kann, einen die wesentliche Tragstruktur der Straßenbaumaschine bildenden Maschinenrahmen. Dieser ist üblicherweise mit vorderen und hinteren Fahreinrichtungen verbunden, beispielsweise Kettenlaufwerken und/oder Rädern. Die Straßenbaumaschine umfasst ferner einen Fahrstand. In diesem kann sich ein Bediener zum Bedienen der Straßenbaumaschine im Fahr- und Arbeitsbetrieb aufhalten. Der Fahrstand ist häufig an einer gegenüber der übrigen Straßenbaumaschine exponierten Stelle angeordnet, beispielsweise einer Oberseite.

Um einem im Fahrstand häufig über vergleichsweise lange Zeiträume befindlichen Bediener vor äußeren Wettereinflüssen, wie beispielsweise Regen, Wind und/oder Sonneneinstrahlung, zu schützen, ist es üblich, den Fahrstand mit einer Wetterschutzeinrichtung auszustatten. Dies kann im einfachsten Fall eine lediglich ein Dachelement und eine Haltestruktur, beispielsweise einen oder mehrere Lagerholme, umfassende Einrichtung sein. Es ist auch bekannt, derartige Einrichtungen mit einer Frontwand, üblicherweise einer Frontscheibe, und einer Heckwand auszustatten, wie beispielsweise in der EP3489416B1 offenbart. Eine derartige zu den Seiten des Fahrstandes offene Wetterschutzeinrichtung bietet auf vergleichsweise einfache und günstige Weise somit in vielen Fällen bereits einen guten Schutz für den Bediener. Werden die Einsatzgebiete jedoch hinsichtlich Wetter, Temperatur und/oder Staub- und Lärmemissionsbelastung herausfordernder, können derartige Wetterschutzeinrichtungen keinen ausreichenden Bedienkomfort für eine auf dem Fahrstand befindliche Bedienperson mehr gewährleisten. Es ist daher auch bereits bekannt, Straßenbaumaschinen mit einer Fahrerkabine auszustatten. Derartige Fahrerkabinen sind üblicherweise im Wesentlichen starre Strukturen mit ineinander übergehenden Wandelementen, so dass der Fahrstand gegenüber der Außenumgebung vollständig eingehaust ist. Der Vorteil von Fahrerkabinen besteht somit darin, dass sie ein im Wesentlichen gegenüber der Außenumgebung isoliertes Raumkompartiment zur Verfügung stellen, in dessen Innerem ein Aufenthaltsraum für den Fahrer vorhanden ist, der zuverlässig vor Wind und Regen geschützt ist und sogar eine eigene Klimatisierung zulässt. Solche Fahrerkabinen bringen allerdings auch Nachteile mit sich. Neben den gegenüber den eingangs erwähnten Wetterschutzeinrichtungen erheblich höheren Kosten sind solche Fahrerkabinen vergleichsweise groß und erschweren potentiell die Einhaltung maximaler Außenabmessungen zur Einhaltung von Transportauflagen oder sind nur mit erhöhtem Einsatz in irgendeiner Form zwischen einer Arbeitsposition und einer, insbesondere in Vertikalrichtung erniedrigten, Stauposition verstellbar. Ein möglicher Ansatz hierzu ist beispielsweise aus der DE102016010660A1 bekannt, die ein Verschwenken der Dachwand zusammen mit den an der Dachwand angeordneten Seitenwänden vorschlägt. Auch wenn diese Variante hinsichtlich der gewünschten Verstellbarkeit der Fahrerkabine aus der Arbeitsposition in die Stauposition bereits gute Ergebnisse liefert, ist sie unter anderem in der Umsetzung nach wie vor kostenintensiv.

Hiervon ausgehend ist es daher die Aufgabe der Erfindung, eine vergleichsweise kostengünstige und gleichzeitig ausreichend wirksame Möglichkeit zum Erhalt eines befriedigenden Wetterschutzes für einen innerhalb des Fahrstandes einer Straßenbaumaschine befindlichen Bediener anzugeben.

Die Lösung der Aufgabe gelingt mit einer Straßenbaumaschine sowie einem Verfahren zum Bereitstellen einer Wetterschutzeinrichtung einer Straßenbaumaschine gemäß den unabhängigen Ansprüchen. Bevorzugte Weiterbildungen sind in den abhängigen Ansprüchen angegeben.

Eine gattungsgemäße selbstfahrende Straßenbaumaschine umfasst ein Antriebsaggregat, über das die für den Fahr- und Arbeitsbetrieb erforderliche Antriebsenergie zur Verfügung gestellt wird. Dies kann beispielsweise ein Verbrennungsmotor, insbesondere ein Dieselverbrennungsmotor, ein Elektromotor, ein hybrides Antriebsaggregat oder ähnliches sein. Die wesentliche Tragstruktur der Straßenbaumaschine wird durch einen ein oder mehrteiligen und/oder -gliedrigen Maschinenrahmen erhalten. Der Maschinenrahmen ist mit vorderen und hinteren Fahreinrichtungen, insbesondere Rädern und/oder Kettenlaufwerken und/oder Walzbandagen, verbunden. Es können eine oder mehrere der Fahreinrichtungen mit dem Maschinenrahmen verbindende Hubeinrichtungen, insbesondere Hubsäulen, vorhanden sein, über die die Lage und Hubhöhe des Maschinenrahmens und gegebenenfalls an diesem befestigter Arbeitseinrichtungen variiert werden kann.

Teil der Straßenbaumaschine ist ferner ein Fahrstand. In diesem können sich ein oder mehrere Bedienelemente befinden, über die der Fahr- und Arbeitsbetrieb der Maschinen von einem Bediener gesteuert werden kann und/oder sonstige Steuereingaben vorgenommen werden können. Innerhalb des Fahrstandes können ferner ein oder mehrere, auch verstellbare, Bediensitze sowie ein oder mehrere Anzeigeeinrichtungen, beispielsweise in Form von Anzeigedisplays etc., vorhanden sein.

Teil des Fahrstandes ist ferner eine Wetterschutzeinrichtung. Die Wetterschutzeinrichtung in ihrer Gesamtheit stellt eine Funktionsgesamtheit dar, die den im Fahrstand befindlichen Bediener vor insbesondere Wettereinflüssen, wie beispielsweise Sonneneinstrahlung, Regen und Wind, schützt. Dazu ist es vorgesehen, dass die Wetterschutzeinrichtung ergänzend zu einem Fahrstandboden mehrere Wandelement umfasst, die den Fahrstand zu den Seiten und in Vertikalrichtung nach oben wenigstens teilweise zur Außenumgebung hin verdecken bzw. schützen. Konkret umfasst dies eine Dachwand, eine Frontwand, eine Heckwand sowie zwei einander gegenüberliegende Seitenwände. Die Angaben "Front" und "Heck" beziehen sich auf eine Vorwärtsrichtung der Straßenbaumaschine bei bestimmungsgemäßer Verwendung. In diese Richtung verläuft auch die Längserstreckung der Straßenbaumaschine. Die Wetterschutzeinrichtung ist zwischen einer Staustellung und einer Wetterschutzstellung verstellbar ausgebildet. In der Wetterschutzstellung befindet sich die Dachwand über dem im Fahrstand befindlichen Bediener, die Frontwand vor dem in Vorwärtsrichtung blickenden Bediener, die Heckwand hinter dem in Vorwärtsrichtung blickenden Bediener und die beiden Seitenwände auf der rechten und linken Seite des in Vorwärtsrichtung blickenden Bedieners. Die Dachwand deckt bei einer Projektion in eine gemeinsame virtuelle Projektionsebene idealerweise wenigstens die gesamte Bodenfläche des Fahrstandes ab und kann über diese sogar zu den Seiten, nach vom und/oder nach hinten auch vorstehen. Die Frontwand erstreckt sich wie auch die Heckwand vorzugsweise über wenigstens im Wesentlichen die gesamte Breite des Fahrstandes. Die Seitenwände erstrecken sich dagegen wenigstens teilweise in Vorwärtsrichtung zwischen der Heckwand und der Frontwand. Die Wetterschutzeinrichtung kann zudem in der Wetterschutzstellung eine oder mehrere in Vertikalrichtung aufragende Tragholme aufweisen, über die die Dachwand und/oder die Front- und/oder Heckwand mit der übrigen Straßenbaumaschine, insbesondere dem Maschinenrahmen, verbunden sind. In der Staustellung befindet sich die Wetterschutzeinrichtung dagegen in einer Position, in der sie platzsparender an der übrigen Straßenbaumaschine angeordnet ist. Dies kann soweit gehen, dass eine bestimmungsgemäße Bedienung der Straßenbaumaschine zumindest in einem Arbeitsbetrieb nicht mehr möglich ist. Die Staustellung wird vorzugsweise derart ausgelegt, dass zumindest die maximale vertikale Erstreckung der Straßenbaumaschine gegenüber der Wetterschutzstellung signifikant reduziert ist.

Bei der Straßenbaumaschine kann es sich insbesondere um eine Bodenfräsmaschine, ganz besonders um eine Straßenfräse, handeln. Derartige Maschinen weisen üblicherweise einen über Hubeinrichtungen, insbesondere Hubsäulen, mit den Fahreinrichtungen verbundenen Maschinenrahmen auf. Es sind Straßenfräsen vom Mittelrotortyp bekannt, bei denen die Arbeitseinrichtung, konkret das Fräsaggregat, insbesondere umfassend eine um eine horizontale Rotationsachse rotierbare, trommelförmige Fräswalze, in Vorwärtsrichtung der Bodenfräsmaschine gesehen zwischen einem Paar vorderer und einem Paar hinterer Fahreinrichtungen angeordnet ist. Die Fräswalze kann sich dabei auf der sogenannten Nullseite mit ihrer Stirnseite bis praktisch an eine der beiden Außenseiten auf der rechten oder linken Seite erstrecken. Derartige Bodenfräsmaschinen sind häufig über vergleichsweise lange Zeitintervalle am Stück im Einsatz und erfordern in vielen Einsatzsituationen trotz ihrer Größe ein vergleichsweise präzises Navigieren. Die Vorteile der Erfindung kommen insbesondere bei einer Straßenbaumaschine vom Typ Straßenfräse besonders zum Tragen.

Es ist zur Lösung der Aufgabe erfindungsgemäß vorgesehen, dass die Seitenwände jeweils ein in der Wetterschutzstellung gemeinsam eine Seitenwand bildendes Seitenwandoberteil und Seitenwandunterteil umfassen, und dass das Seitenwandoberteil und das Seitenwandunterteil einer Seitenwand in der Staustellung gegenüber ihrer Relativlage in der Wetterschutzstellung zueinander verlagert sind. Bei dem Seitenwandunterteil und dem Seitenwandoberteil handelt es sich somit um zwei zueinander separate Wandelemente, die gemeinsam und im Zusammenwirken miteinander eine Seitenwand in der Wetterschutzstellung bilden. Die vormals im Stand der Technik bekannten Seitenwände werden erfindungsgemäß somit jeweils in ein Seitenwandunterteil und ein Seitenwandoberteil zergliedert bzw. zerlegt. Sowohl das Seitenwandunterteil als auch das Seitenwandoberteil weisen jeweils einen in der Wetterschutzstellung eine Außenwand bildenden Wandbereich auf. Dieser Wandbereich kann besonders als insbesondere plane und sich über eine Fläche erstreckende Wandfläche ausgebildet sein. Der Wandbereich stellt eine physische Barriere des Fahrstandes gegenüber einem daran angrenzenden Teil der Außenumgebung dar. Die Haupterstreckungsfläche der Seitenwand erstreckt sich vorzugsweise in einer in Vorwärtsrichtung und in Vertikalrichtung verlaufenden Ebene. Der Wandbereich des Seitenwandunterteils und der Wandbereich des Seitenwandoberteils bilden in der Wetterschutzstellung idealerweise einen zusammenhängenden und/oder unmittelbar ineinander übergehenden Gesamtwandbereich bzw. eine zusammenhängende Gesamtfläche, der/die im gemeinsamen Zusammenwirken den Fahrstand zu einer Seite hin, .d.h. in eine Vorwärtsrichtung des Straßenbaumaschine gesehen zur rechten oder zu linken Seite hin, gegenüber der Außenumgebung abgrenzt bzw. abschirmt.

Ergänzend hierzu können ein oder mehrere Befestigungsbereiche von dem Seitenoberwandteil und dem Seitenunterwandteil mit umfasst sein. Die Befestigungsbereiche müssen nicht notwendigerweise gleichzeitig ein Wandbereich sein. Die Befestigungsbereiche können dazu vorgesehen sein, das Seitenoberwandteil und/oder das Seitenunterwandteil in der Wetterschutzstellung und/oder der Staustellung an einer geeigneten Lagereinrichtung im Bereich der übrigen Baumaschine und/oder miteinander, insbesondere lösbar, zu verbinden. Die dazu vorgesehenen lösbaren Befestigungseinrichtungen können beispielsweise entsprechende Verschlüsse, Scharniere, Gelenke, Schraubverbindungen, Klemmverbindungen, Klettverschlüsse, Magnetverschlüsse und/oder vergleichsbares umfassen.

Das Seitenwandunterteil befindet sich in der Wetterschutzstellung in Vertikalrichtung gesehen somit zum weit überwiegenden Teil unterhalb des Seitenwandoberteils und steht insbesondere in Vertikalrichtung nach unten über die Unterkante des Seitenwandoberteils vor und ragt insbesondere von einem Fahrstandboden in Vertikalrichtung nach oben auf. Umgekehrt befindet sich das Seitenwandoberteil in der Wetterschutzstellung in Vertikalrichtung gesehen somit zum weit überwiegenden Teil oberhalb des Seitenwandoberteils, erstreckt sich in Vertikalrichtung nach ober insbesondere bis hin zur Dachwand und steht insbesondere in Vertikalrichtung nach oben über die Oberkante des Seitenwandoberteils vor.

In der Staustellung dagegen bestehen mannigfaltige Variationsmöglichkeiten der Relativanordnung des Seitenwandoberteils relativ zum Seitenwandunterteil. In diesem Zusammenhang kann es beispielsweise bevorzugt sein, wenn das Seitenwandoberteil gegenüber dem Seitenwandunterteil bei einer Verstellung zwischen der Wetterschutzstellung und der Staustellung um eine Achse verschwenkt und/oder entlang einer Achse verschoben wird. Insbesondere kann es vorgesehen sein, dass eine Verstelleinrichtung der Wetterschutzeinrichtung derart ausgebildet ist, dass das Seitenwandoberteil relativ zum Seitenwandunterteil in einer in Vertikalrichtung und in Vorwärtsrichtung verlaufenden Ebene translatorisch zueinander verstellt werden. Insbesondere ist es jedoch bevorzugt, wenn die vormals in der Wetterschutzstellung den Gesamtwandbereich bildenden jeweiligen Wandbereiche des Seitenwandoberteils und des Seitenwandunterteils in der Staustellung zueinander getrennt sind und somit gerade keinen zusammenhängenden Gesamtwandbereich mehr bilden.

Um einen insgesamt insbesondere möglichst winddichten Abschluss des Fahrstandes durch die jeweiligen Seitenwandober- und -unterteile zu erlangen, ist es vorteilhaft, wenn das jeweilige Seitenwandoberteil mit dem jeweiligen Seitenwandunterteil in der Wetterschutzstellung wenigstens unmittelbar aneinander angrenzend und somit auf Stoß angeordnet sind. Dies kann allerdings im Einzelfall ein vergleichsweise präzises Fertigen und Führen des Seitenwandoberteils relativ zum Seitenwandunterteil erfordern. Bevorzugt ist es daher, wenn das Seitenwandoberteil und das Seitenwandunterteil derart ausgebildet sind, dass sie sich einander in der Wetterschutzstellung in einem Überlappungsbereich überlappen, insbesondere im Überlappungsbereich unmittelbar aneinander anliegen. Die Überlappung erfolgt vorzugsweise derart, dass das Seitenwandoberteil und das Seitenwandunterteil in Vertikalrichtung im Überlappungsbereich wenigstens auf gleicher Höhe und in Horizontalrichtung quer zur Vorwärtsrichtung der Straßenbaumaschine unmittelbar hintereinander verlaufen. Dadurch, dass sich das Seitenwandoberteil und das Seitenwandunterteil in diesem Fall wenigstens teilweise überlagern, ist es auf vergleichsweise einfache Art und Weise möglich, eine stabile und unter den gegebenen Umständen ausreichend dichte Gesamtseitenwand aus den beiden Seitenwandteilen zu erhalten. Das Seitenwandoberteil und das Seitenwandunterteil sind in diesem Fall somit derart ausgebildet, dass sie in der Wetterschutzstellung eine gemeinsame, durchgehende und zusammenhängende Seitenwandaußenfläche bilden, wobei sie sich hierzu teilweise einander überlagern. Vorteilhaft ist es, wenn sich das Seitenwandoberteil und das Seitenwandunterteil derart überlappen, dass das Seitenwandoberteil in der Horizontalebene vom Fahrstand aus gesehen außen liegt und demgegenüber das Seitenwandunterteil in Richtung zum Fahrstand hin versetzt ist.

Es kann vorgesehen sein, dass das Seitenwandoberteil und das Seitenwandunterteil derart ausgebildet und an der übrigen Straßenbaumaschine gelagert sind, dass sie bei einer Verstellung der Wetterschutzeinrichtung zwischen der Wetterschutzstellung und der Staustellung beide relativ zur übrigen Straßenbaumaschine verstellt werden. Dies kann gleichzeitig oder auch zeitlich nacheinander erfolgen. Bevorzugt ist es jedoch, wenn das Seitenwandunterteil bei einer Verstellung der Wetterschutzeinrichtung zwischen der Wetterschutzstellung und der Staustellung ortsfest gegenüber dem Maschinenrahmen ist. Dies bedeutet, dass sich die Relativlage des Seitenwandunterteils bei einer Verstellung der Wetterschutzeinrichtung zwischen der Wetterschutzstellung und der Staustellung relativ zum Maschinenrahmen nicht ändert. Dies bedeutet jedoch nicht, dass nicht auch das Seitenwandunterteil Elemente und/oder Bereiche aufweisen kann, die für sich in ihrer Relativlage relativ zu übrigen Baumaschine verstellbar sind, wie nachstehend noch näher erläutert. Dies kann insbesondere eine Tür oder ähnliches betreffen. Eine Verstellung des Seitenwandunterteils relativ zum Maschinenrahmen ist jedoch nicht erforderlich, wenn die Wetterschutzeinrichtung zwischen der Wetterschutzstellung und der Staustellung verstellt wird bzw. werden soll. Insbesondere kann es beispielsweise vorgesehen sein, dass das Seitenwandunterteil als eine gegenüber einer Bodenfläche eines Fahrstandbodens aufragende Seitenwand ausgebildet ist. Diese Seitenwand kann derart ausgebildet sein, dass sie sich in Vorwärtsrichtung über die gesamte Länge des Fahrstandes erstreckt, auf diese Weise in Höhe des Seitenwandunterteils die jeweilige Seite des Fahrstandes insbesondere vollständig gegenüber der sich daran anschließenden Außenumgebung abgrenzt. Das Seitenwandunterteil weist in diesem Fall bevorzugt eine Erstreckung in Vertikalrichtung nach oben vom Boden des Fahrstandes aus gesehen von wenigstens 40 cm, insbesondere von wenigstens 50 cm auf. Ergänzend oder alternativ erstreckt sich das Seitenwandunterteil mit seiner in Vertikalrichtung maximal obenliegenden Oberkante bis auf Höhe einer Außenoberfläche einer in oder entgegen der Vorwärtsrichtung an den Fahrstand angrenzenden Karosserie, wobei die Karosserie im vorliegenden Fall die Außenoberfläche der Verkleidungselemente der Straßenbaumaschine bezeichnet, beispielsweise umfassend Seitenwände, eine Frontwand, eine Rückwand und einer Oberseitenwand, wobei diese Verkleidungselemente auch Klappen, Türen und/oder Hauben umfassen können. Dadurch, dass bei dieser Weiterbildung der Erfindung das Seitenwandunterteil sich in Vertikalrichtung bis maximal an den daran angrenzenden Karosseriebereich, insbesondere dessen Oberseitenwand, erstreckt, wird beispielsweise eine ästhetisch ansprechende Gesamterscheinung erhalten und gleichzeitig ein vergleichsweise kompakter Fahrstand, insbesondere in der Staustellung.

Die von dem Seitenwandunterteil gebildete Seitenwand kann eine oder mehrere öffenbare Türen aufweisen, um beispielsweise einen Zutritt von außerhalb der Straßenbaumaschine in den Fahrstand zu ermöglichen.

Es ist bekannt, dass der Fahrstand ein Geländer umfasst, beispielsweise zur Sturzsicherung eines innerhalb des Fahrstandes befindlichen Bedieners. Solche Geländer umfassen typischerweise ein oder mehrere Vertikalstreben und/oder sich in Vorwärtsrichtung der Straßenbaumaschine erstreckende Horizontalstreben und häufig wenigstens einen Handlauf. Das Geländer kann starr an der Straßenbaumaschine angeordnet sein oder auch ganz oder teilweise bzw. in Teilen gegenüber der übrigen Straßenbaumaschine verstellbar sein. Erfindungsgemäß ist es nun bevorzugt, wenn das Seitenwandunterteil, insbesondere unmittelbar, am Geländer angeordnet ist. Auf diese Weise kann das Geländer nicht nur als Sturzsicherung, sondern gleichzeitig auch als Lagerstruktur für das Seitenwandunterteil oder für zumindest Teile davon genutzt werden. Das Seitenwandunterteil kann fest mit dem Geländer verbunden sein oder aber auch zum routinemäßigen Lösen vorgesehen sein. Die zwischen dem Seitenwandunterteil und dem Geländer bestehende Verbindungseinrichtung ist in diesem Fall bevorzugt werkzeugfrei bzw. manuell lösbar und herstellbar.

Das Seitenwandunterteil kann aus einem flexiblen Material bestehen. Es kann allerdings bevorzugt sein, wenn das Seitenwandunterteil wenigstens teilweise und insbesondere vollständig (wobei in diesem Fall potentiell vorhandene Befestigungs- und/oder Dichteinrichtungen offensichtlich nicht auch aus einem starren/formstabilen Material bestehen müssen) aus einem starren und formstabilen Material besteht, insbesondere dann, wenn es bei einer Verstellung der Wetterschutzeinrichtung zwischen der Staustellung und der Wetterschutzstellung ortsfest gegenüber dem Maschinenrahmen ist.

Hinsichtlich der Ausgestaltung des Seitenwandoberteils sind ebenfalls verschiedene Ausgestaltungsvarianten möglich und auch vorteilhaft. So kann es vorgesehen sein, dass das Seitenwandoberteil wenigstens teilweise und insbesondere vollständig aus einem flexiblen Material besteht bzw. in sich flexibel ist. Dies ermöglicht eine vergleichsweise einfache Handhabung des Seitenwandoberteils, insbesondere zur Verstellung der Wetterschutzeinrichtung zwischen der Staustellung und der Wetterschutzstellung. So ist es beispielsweise in diesem Fall möglich und bevorzugt, dass das Seitenwandoberteil in der Staustellung wenigstens teilweise gegenüber der Wetterschutzposition eingerollt und/oder gefaltet ist.

Alternativ kann es auch für das Seitenwandoberteil bevorzugt sein, wenn es wenigstens teilweise und insbesondere vollständig aus einem starren/formstabilen Material besteht (wobei in diesem Fall potentiell vorhandene Befestigungs- und/oder Dichteinrichtungen offensichtlich nicht auch aus einem starren/formstabilen Material bestehen müssen). Die Nutzung eines starren/formstabilen Materials bringt den Vorteil mit sich, dass insgesamt eine vergleichsweise stabile Gesamtstruktur der Wetterschutzeinrichtung, insbesondere in der Wetterschutzstellung, möglich ist.

Insbesondere dann, wenn das Seitenwandoberteil aus einem starren und formstabilen Material besteht, ist es bevorzugt, wenn es als eine an der Dachwand aufgehängte Wandplatte ausgebildet ist. Die Dachwand kann dazu beispielsweise einen eine Dachschale tragenden Tragrahmen umfassen, an den die Wandplatte, beispielsweise auch lösbar, befestigt ist. Die Befestigung kann statisch sein oder auch ein Gelenk umfassen, um eine Relativbewegung zwischen der Dachwand und der Wandplatte zu ermöglichen, beispielsweise bei einer Verstellung der Wetterschutzeinrichtung zwischen der Staustellung und der Wetterschutzstellung. Insbesondere ermöglicht es eine solche gelenkige Verbindung zwischen der Dachwand und der Wandplatte auch, dass der im Fahrstand befindliche Bediener wählen kann, ob er die Wandplatte bei in Wetterschutzstellung befindlicher Wetterschutzeinrichtung nutzen möchte oder beispielsweise hiervon ausgehend selektiv nur die Wandplatte in eine Position verstellen möchte, in der sie nicht mehr als Schutz zur Außenumgebung wirkt.

Die Befestigung des Seitenwandoberteils, insbesondere der Wandplatte, an der Dachwand kann statisch sein oder auch ein oder mehrere Gelenke umfassen, um eine Relativbewegung zwischen der Dachwand und dem Seitenwandoberteil, insbesondere der Wandplatte, zu ermöglichen, beispielsweise bei einer Verstellung der Wetterschutzeinrichtung zwischen der Staustellung und der Wetterschutzstellung. Insbesondere ermöglicht es eine solche gelenkige Verbindung zwischen der Dachwand und dem Seitenwandoberteil, insbesondere der Wandplatte, dass der im Fahrstand befindliche Bediener wählen kann, ob er das Seitenwandoberteil, insbesondere die Wandplatte, bei in Wetterschutzstellung befindlicher Wetterschutzeinrichtung nutzen möchte oder beispielsweise hiervon ausgehend selektiv nur die Wandplatte in eine Position verstellen möchte, in der sie nicht mehr und/oder an anderer Stelle als Schutz zur Außenumgebung wirkt. Es ist somit bevorzugt, wenn das Seitenwandoberteil in der Wetterschutzstellung verstellbar, insbesondere verschiebbar, an der Dachwand angeordnet ist. Dazu kann die Dachwand, insbesondere ein Tragrahmen der Dachwand, beispielsweise eine oder mehrere Führungsschienen oder Aufhängeeinrichtungen aufweisen, an der das Seitenwandoberteil, insbesondere die Wandplatte, in verschiedenen Positionen verstellbar ist.

Die Wandplatte kann derart ausgebildet sein, dass sie einen gegenüber einer Hauptwandfläche zur Außenseite vorstehenden Übergriffkragen aufweist, der in der Wetterschutzstellung einer Oberkante des Seitenwandunterteils übergreift. Die Wandfläche der Wandplatte bezeichnet die zur Außenumgebung und in Richtung vom Fahrstand weg gewandte Oberfläche der Wandplatte. Die Hauptwandfläche bezeichnet einen Flächenanteil an dieser Gesamtfläche von wenigstens 60%. Die Wandplatte umfasst somit vorzugsweise eine in sich homogene und plane und ebene Fläche, die die Hauptwandfläche bildet. Aus dieser Ebene, in der die Hauptwandfläche verläuft, ragt der Bereich des Übergriffkragens wenigstens teilweise heraus, verläuft und erstreckt sich, insbesondere mit einem Anschlagbereich, wenigstens teilweise insbesondere in einer parallel zu dieser Ebene verlaufenden zweiten Ebene. Der Anschlagbereich kann zur unmittelbaren Anlage an dem Seitenwandunterteil vorgesehen und ausgebildet sein. Es ist ergänzend oder alternativ möglich, dass zumindest die Hauptwandfläche des Seitenwandoberteils in der Staustellung und/oder in der Wetterschutzstellung in einer gemeinsamen virtuellen Ebene liegt, in der sich auch eine Hauptwandfläche des Seitenwandunterteils erstreckt.

Aufgrund der gewünschten Wetterschutzfunktion der Wetterschutzeinrichtung in Wetterschutzstellung für einen innerhalb des Fahrstandes befindlichen Bediener liegen die Seitenwände mit ihrem Seitenwandoberteil und ihrem Seitenwandunterteil potentiell zumindest teilweise im Blickfeld des Bedieners. Dies kann die Übersicht über die Straßenbaumaschine und das an die Straßenbaumaschine angrenzende Umfeld beeinträchtigen. Aus diesem Grund ist es daher auch bevorzugt, wenn das Seitenwandoberteil und/oder das Seitenwandunterteil wenigstens teilweise und insbesondere, zumindest in der Fläche, vollständig aus einem transparenten Material, insbesondere einem bruchfesten Glas und/oder einem Kunststoffmaterial, bestehen. Auf diese Weise kann der Bediener durch den jeweiligen Seitenwandteil aus dem Fahrstand heraus hindurchblicken.

Vorteilhafte Effekte der Erfindung können bereits dann auftreten, wenn die aus dem Seitenwandoberteil und dem Seitenwandunterteil gebildeten Seitenwände jeweils eine Seite des Fahrstandes ergänzend zur Dachwand, Heckwand und Frontwand nur teilweise überdecken bzw. vom Fahrstand aus gesehen zur Außenumgebung hin verschließen. Diese Variante kann sich im Einzelfall durch eine besonders kostengünstige und pragmatische Umsetzung als vorteilhaft erweisen. Bezogen auf eine maximale Seitenöffnungsgröße, die vom Fahrstand aus zur Seite hin besteht und üblicherweise durch die jeweiligen Seitenaußenkanten des Fahrstandbodens, der Dachwand, der Frontwand und der Heckwand umrahmt wird, ist es bevorzugt, wenn die Seitenwand bei in Wetterschutzstellung befindlicher Wetterschutzeinrichtung wenigstens 70%, insbesondere wenigstens 80%, der maximalen Seitenöffnungsgröße Abdeckt. Es kann allerdings auch vorteilhaft sein, wenn die Wetterschutzeinrichtung den Fahrstand in der Wetterschutzstellung vollständig einhaust. Auf diese Weise kann insgesamt zumindest in der Wetterschutzstellung eine annähernd kabinenartige Gesamtstruktur erhalten werden.

Grundsätzlich besteht die Möglichkeit, dass das Seitenwandoberteil und das Seitenwandunterteil jeweils für sich aus einem einzigen zusammenhängenden, insbesondere insgesamt formstabilen, Element bestehen. Alternativ hierzu ist es aber auch möglich, dass das Seitenwandoberteil und/oder das Seitenwandunterteil aus mehreren relativ zueinander verstellbaren Wandsegmenten bestehen. Auf diese Weise kann insbesondere in der Staustellung eine äußerst kompakte Anordnung der Wetterschutzeinrichtung erreicht werden.

Es kann vorgesehen sein, dass sich das Seitenwandoberteil in Vorwärtsrichtung über die gesamte Länge des Fahrstandes erstreckt und auf diese Weise in Höhe des Seitenwandoberteils die jeweilige Seite des Fahrstandes insbesondere vollständig gegenüber der sich daran anschließenden Außenumgebung abgrenzt. Es kann aber auch vorgesehen sein, dass sich das Seitenwandoberteil nur teilweise über die gesamte Länge des Fahrstandes erstreckt, wenigstens aber vorzugsweise über 60% der Länge des Fahrstandes in Vorwärtsrichtung. Auf diese Weise wird somit bewusst eine Öffnung freigehalten, die nicht vom Seitenwandoberteil abgedeckt wird. Dies kann im Einzelfall zu Navigationszwecken vorteilhaft sein.

Das Seitenwandoberteil weist ferner bevorzugt eine Erstreckung in Vertikalrichtung von oben von der Dachwand kommend in Richtung zum Bodenuntergrund hin eine Erstreckung von wenigstens 40 cm, insbesondere von wenigstens 50 cm, ganz besonders von wenigstens 100 cm auf. Ergänzend oder alternativ erstreckt sich das Seitenwandoberteil in Vertikalrichtung wenigstens soweit nach unten, dass seine maximal untenliegende Unterkante unterhalb einer Höhe einer Außenoberfläche, insbesondere der Karosserieoberseite, liegt.

Es kann vorgesehen sein, dass die Dachwand mittels einer Schwenkeinrichtung von der Wetterschutzstellung in die Staustellung verstellbar, insbesondere verschwenkbar ist. Dies kann so weit gehen, dass sie in der Staustellung auf einer Karosserieoberseite der Straßenbaumaschine, insbesondere auf einer in Vorwärtsrichtung der Straßenbaumaschine gesehen vor oder hinter dem Fahrstand befindlichen Karosserieoberseite, aufliegt. Hierbei kann es vorteilhaft sein, wenn die Dachwand in der Staustellung soweit in oder entgegen einer Längserstreckungsrichtung der Straßenbaumaschine verlagert ist, dass an der Dachwand angeordnete Seitenwandoberteile Hubeinrichtungen vorderer Fahreinrichtungen wenigstens teilweise und insbesondere vollständig überragen. Die Seitenwandoberteile befinden sich mit anderen Worten von Fahrstand in oder entgegen der Vorwärtsrichtung aus gesehen in Horizontalrichtung auf Höhe dieser Hubeinrichtungen oder erstrecken sich in diese Richtung sogar über die Hubeinrichtungen hinaus. Auf diese Weise ist es möglich, die beschriebene Dachverschwenkung in die Staustellung bei gleichzeitig vergleichsweise kompakter Gesamtmaschine zu erreichen. Ergänzend oder alternativ befinden sich die Seitenwandoberteile in der Staustellung insbesondere bei dieser Variante in Vertikalrichtung gesehen auf Höhe der Hubeinrichtungen.

Es ist ergänzend oder alternativ möglich, dass die Dachwand mittels einer Schwenkeinrichtung von der Wetterschutzstellung in die Staustellung in oder entgegen einer Längserstreckung der Straßenbaumaschine verschwenkbar ist derart, dass sie in der Staustellung auf einer Karosserieoberseite der Straßenbaumaschine aufliegt, wobei an der Dachwand angeordnete Seitenoberwandteile Seitenwandbereiche der Karosserieseitenwände der Straßenbaumaschine quer zu einer Längserstreckungsrichtung überlappen. Bei dieser Ausführungsform befinden sich die Karosserieseitenwände und die Seitenwandoberteile somit wenigstens teilweise in Vertikalrichtung gesehen auf gleicher Höhe.

Die Wetterschutzeinrichtung der Straßenbaumaschine wird häufig dann in die Staustellung verstellt, wenn die Straßenbaumaschine transportiert werden soll und dafür in eine bezüglich ihrer Außenabmessungen in einen möglichst kompakten Zustand versetzt werden soll. Gleichzeitig soll aber gerade in der Staustellung das Risiko potentieller Beschädigungen durch beispielsweise den Transport der Straßenbaumaschine reduziert werden. Aus diesem Grund ist es bevorzugt, wenn die Seitenwandoberteile in der Staustellung in Vertikalrichtung nach unten gesehen mit ihrer Unterkante überstandfrei gegenüber der Unterseite der übrigen Straßenbaumaschine sind. Auf diese Weise ist gewährleistet, dass die im Vergleich zum Maschinenrahmen der Straßenbaumaschine fragilen Seitenwandoberteile in Vertikalrichtung nach unten gegenüber der übrigen Maschine exponierte Teilbereich aufweisen.

Ein anderes Szenario, in dem die Wetterschutzeinstellung häufig in die Staustellung verbracht wird, ist das Abstellen der Straßenbaumaschine, beispielsweise zwischen Arbeitstagen und/oder während längerer Stillstandzweiten. Speziell für diese Situation ist es bevorzugt, wenn einerseits die Seitenwandunterteile aus einem starren und formfesten Material bestehen, wie vorstehend bereits erwähnt, und zudem ortsfest und dauerhaft, d.h. zumindest nicht werkzeug- und/oder zerstörungsfrei demontierbar, gegenüber dem Maschinenrahmen angeordnet und an der Straßenbaumaschine befestigt sind. Gleichzeitig ist es vorteilhaft, wenn die Dachwand mithilfe einer der vorstehend genannten Schwenkeinrichtungen wie dort beschrieben verschwenkbar ist. Es kann nun vorgesehen sein, dass die durch das Wegschwenken der Dachwand vom übrigen Fahrstand in der Abdeckung des Fahrstandes entstehende Lücke durch die Heckwand oder Frontwand verdeckt bzw. abgedeckt wird. Dadurch wird eine Art Behelfsdach erhalten und der in der Staustellung verbleibende Innenraum des Fahrstandes ist nach wie vor gegenüber der Außenumgebung geschützt. Dadurch werden nicht nur die im Inneren dieses Innenraums vorhandenen Einrichtungen, wie beispielsweise Bedienelemente, ein Fahrersitz etc. vor Wettereinflüssen geschützt. Gleichzeitig wird dadurch auch der Zutritt von außen in diesen Innenraum erschwert oder sogar verhindert, wodurch insgesamt ein Vandalismusschutz erreicht wird.

Es ist somit grundsätzlich bevorzugt, wenn das Seitenwandunterteil derart ausgebildet ist, dass es sich in der Staustellung der Wetterschutzeinrichtung bis zu Dachwand erstreckt und in der Wetterschutzstellung dagegen nicht.

Um eine zuverlässige Positionierung des Seitenwandoberteils in der Staustellung und/oder in der Wetterschutzstellung zu gewährleisten, ist es möglich, dass eine Arretiervorrichtung vorhanden ist, die das Seitenoberwandteil lösbar, insbesondere am Seitenunterwandteil, in der Wetterschutzstellung und/oder in der Staustellung feststellt. Dies ist bevorzugt eine manuell lösbare und arretierbare Arretiervorrichtung, wie beispielsweise ein Klemm- und/oder Rastverschluss, eine Magnetverbindung etc. Sofern ein Geländer vorhanden ist, kann insbesondere auch das Geländer zur Befestigung des Seitenwandoberteils in der Wetterschutzstellung mithilfe der Arretiervorrichtung genutzt werden.

Es kann vorgesehen sein, dass der Fahrstand Gebläseeinrichtung umfasst, die derart ausgebildet ist, dass über sie angesaugte Außenumgebungsluft in den Innenraum des Fahrstands ausblasbar ist. Auf diese Weise kann ein Überdruck innerhalb des Fahrstandes mit in Wetterschutzstellung befindlicher Wetterschutzeinrichtung erzeugt werden, um auf diese Weise das Eindringen von beispielsweise Staub aus der Außenumgebung der Straßenbaumaschine in den Innenraum des Fahrstandes zu verhindern oder diesem zumindest Entgegenzuwirken. Da die mit der erfindungsgemäßen Wetterschutzeinrichtung mögliche Dichtheit der Einhausung des Fahrstandes in der Regel nicht mit der Dichtheit einer Fahrerkabine vergleichbar ist, kann dieser zusätzliche Schutz für den innerhalb des Fahrstandes befindlichen Bediener besonders hilfreich sein.

Ein weiterer Aspekt der Erfindung betrifft ein Verfahren zum Bereitstellen einer Wetterschutzeinrichtung einer Straßenbaumaschine, insbesondere einer erfindungsgemäßen Straßenbaumaschine.

Das erfindungsgemäße Verfahren umfasst in einem Schritt a) zunächst ein Verstellen einer Wetterschutzeinrichtung aus einer Staustellung in eine Wetterschutzstellung. Zu weiteren Einzelheiten und bevorzugten Weiterbildungen wird auf die vorhergehenden Angaben Bezug genommen.

In einem Schritt b) erfolgt ein Verstellen der Relativlage eines Seitenwandoberteils und eines Seitenwandunterteil relativ zueinander zum Erhalt einer Seitenwand. Das Seitenwandoberteil und das Seitenwandunterteil werden somit in eine Relativlage zueinander verbracht, in der sie im gemeinsamen Zusammenwirken insgesamt eine Seitenwand des Fahrstandes bilden, insbesondere eine sich von der Dachwand bis hinunter zum Fahrstandboden erstreckende Seitenwand.

Die Schritte a) und b) können gleichzeitig oder aber auch nacheinander erfolgen.

Die Erfindung wird nachstehend anhand der in den Figuren gezeigten Ausführungsbeispiele näher erläutert. Es zeigen schematisch:
- Fig. 1A:: eine perspektivische Schrägansicht auf eine Straßenbaumaschine von schräg hinten links mit in Wetterschutzstellung befindlicher Wetterschutzeinrichtung;
- Fig. 1B:: eine perspektivische Schrägansicht auf eine Straßenbaumaschine von schräg hinten links mit in Staustellung befindlicher Wetterschutzeinrichtung;
- Fig. 2A:: eine Vergrößerung des Bereiches I aus der Fig. 1A und
- Fig. 2B:: eine Vergrößerung des Bereiches II aus der Fig. 1B.

Gleiche beziehungsweise gleich wirkende Bauteile sind in den Figuren mit den gleichen Bezugszeichen bezeichnet. Sich wiederholende Bauteile sind nicht notwendigerweise in jeder Figur gesondert bezeichnet.

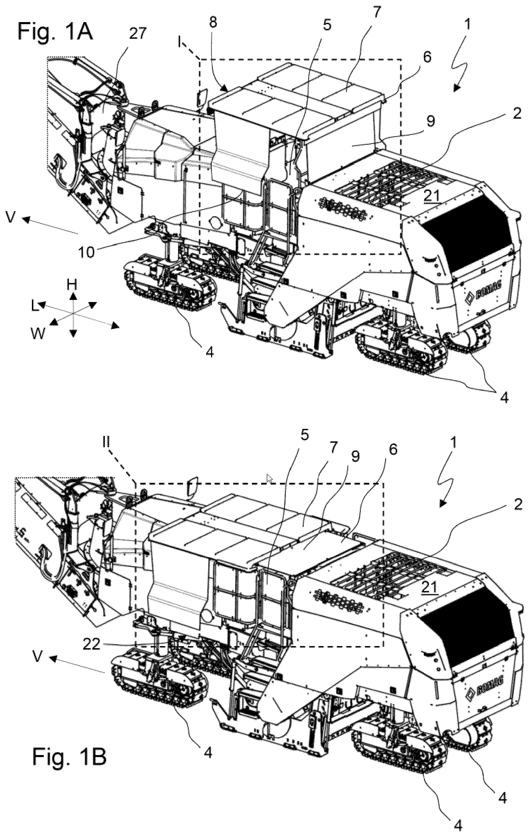

Figur 1 zeigt eine Straßenbaumaschine 1 vom Typ Bodenfräsmaschine, ganz konkret eine Straßenfräse. Die Straßenbaumaschine 1 umfasst ein Antriebsaggregat 2, über das die für den Fahr- und Antriebsbetrieb erforderliche Antriebsenergie bereitgestellt wird. Dies kann beispielsweise ein Dieselverbrennungsmotor oder auch ein Elektromotor sein. Die wesentliche Tragstruktur der Straßenbaumaschine 1 bildet ein Maschinenrahmen 3. Dieser ist mit Fahreinrichtungen 4 verbunden, bei denen es sich um Rad- oder Kettenlaufwerke handeln kann. Die Fahreinrichtungen 4 können Antriebsmotoren aufweisen, beispielsweise Elektro- oder Hydraulikmotoren. Der Steuerung der Straßenbaumaschine 1 erfolgt von einem Fahrstand 5 aus, der eine Wetterschutzeinrichtung 6 mit einer Dachwand 7, einer Frontwand 8, einer Heckwand 9 und Seitenwänden 10 umfasst.

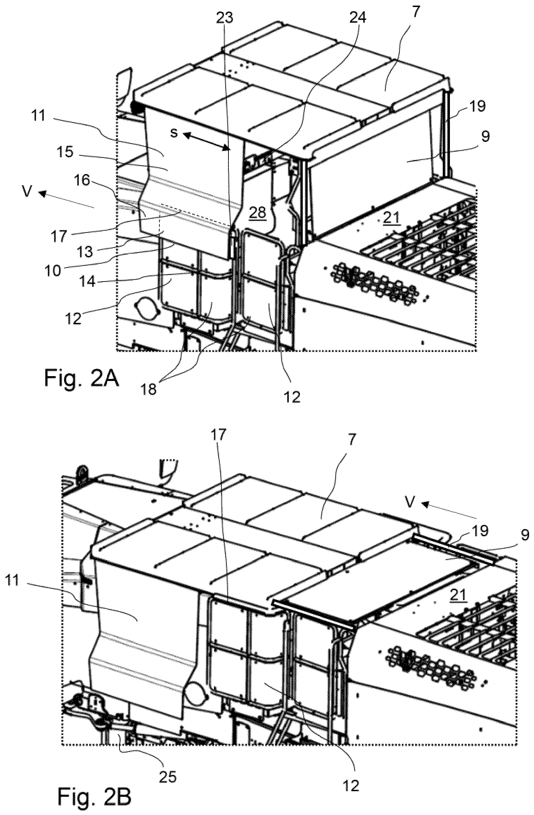

Die Wetterschutzeinrichtung 6 ist zwischen einer Wetterschutzstellung, wie in den Figuren 1A und 2A gezeigt, und einer Staustellung, wie in den Fig. 1B und 2B gezeigt, verstellbar. Fig. 2A ist dabei eine Ausschnittsvergrößerung des Bereiches I aus der Fig. 1A und Fig. 2B eine Ausschnittsvergrößerung des Bereiches II aus der Fig. 1B.

In der Wetterschutzstellung befindet sich die Wetterschutzeinrichtung in einer Position, in der sie den Innenraum der Straßenbaumaschine 1 vor Wettereinflüssen, wie beispielsweise Regen, Wind und Sonne, schützt. Befindet sich in Bediener innerhalb des Fahrstandes 2, befindet sich die Dachwand 7 dann in Vertikalrichtung über ihm, die Frontwand 8 in Vorwärtsrichtung V vor ihm, die Heckwand 9 in Vorwärtsrichtung V hinter ihm und auf der rechten und auf der linken Seite jeweils eine Seitenwand 10.

In der Staustellung befindet sich die Wetterschutzeinrichtung 6 dagegen in einer eher platzsparenden Positionierung an der Straßenbaumaschine 1. Im vorliegenden Ausführungsbeispiel kann die Dachwand 7 dazu in einer nachstehend noch näher beschriebenen Weise in Vorwärtsrichtung V herabgeschwenkt werden, so dass die maximale Erstreckung, insbesondere die maximale Erstreckung in Vertikalrichtung bzw. die maximale Höhenerstreckung der Straßenbaumaschine 1 vom Bodenuntergrund aus gesehen in der Staustellung gegenüber der maximalen Erstreckung der Straßenbaumaschine 1 in der Wetterschutzstellung reduziert ist. Die Straßenbaumaschine hat eine Längserstreckung in Richtung L, eine Höhenerstreckung in Richtung H und eine Breitenerstreckung in Richtung W.

Bei der vorliegend beispielhaft dargestellten Straßenbaumaschine 1 handelt es sich um eine Bodenfräsmaschine, konkret um eine Straßenfräse. Besonderheiten dieser Maschinen können darin bestehen, dass die Fahreinrichtungen 4 über höhenverstellbare Hubeinrichtungen 25, insbesondere Hubsäulen, mit dem Maschinenrahmen 3 verbunden sind. Ferner kann ein Fräsaggregat 26 mit einer in ihrem Inneren aufgenommenen Fräswalze (in den Figuren nicht dargestellt) vorhanden sein. Das kastenartig ausgebildete Fräsaggregat 26 kann direkt am Maschinenrahmen 3 befestigt und insbesondere ortsfest mit diesem ausgebildet sein. Beim vorliegenden Ausführungsbeispiel ist das Fräsaggregat in Vorwärtsrichtung A gesehen zwischen vorderen und hinteren Fahreinrichtungen angeordnet und befindet sich somit mit anderen Worten in Vorwärtsrichtung V gesehen ungefähr in der Mitte der Längserstreckung L der Straßenfräse. Straßenfräsen mit einer solchen Anordnung des Fräsaggregates werden auch als Mittelrotorfräse bezeichnet. Die Bodenfräsmaschine umfasst im vorliegenden Ausführungsbeispiel ferner eine Fördereinrichtung 27. Über die Fördereinrichtung 27 kann während eines Fräsprozesses im Fräsaggregat anfallendes Fräsgut abtransportiert und bis hin zu einem in den in den Figuren nicht dargestellten Abwurfpunkt befördert werden.

Die maximale Längserstreckung der Straßenbaumaschine 1 bezeichnet die maximale erstrecken der Straßenbaumaschine 1 in einer horizontalen Projektionsebene, allerdings ohne das Anhängeförderband. Die maximale Höhenerstreckung der Straßenbaumaschine 1 ist ihre jeweils maximale Erstreckung in Vertikalrichtung vom Bodenuntergrund aus gesehen. Die maximale Breitenerstreckung der Straßenbaumaschine 1 ist ihre maximale horizontale Erstreckung in einer vertikalen Projektionsebene senkrecht zur Längserstreckung L. Die entsprechenden Richtungsangaben sind in der Fig. 1 exemplarisch für alle Figuren angegeben.

Jede der beiden Seitenwände 10 (in den Figuren ist nur die linke Seitenwand 10 erkennbar) umfasst ein Seitenwandoberteil 11 und ein Seitenwandunterteil 12. Die Seitenwand 10 besteht somit aus zwei in Vertikalrichtung wenigstens teilweise übereinander angeordneten Teilsegmenten.

Das Seitenwandunterteil 12 steht in Vertikalrichtung nach oben vom Boden des Fahrstandes ab und erstreckt sich bis ca. der Hälft des Abstandes des Fahrstandbodens in Vertikalrichtung bis zur Dachwand 7. In Vertikalrichtung nach oben endet das Seitenwandunterteil 12 ungefähr auf Höhe der an den Fahrstand 5 in oder entgegen der Vorwärtsrichtung V angrenzenden Karosserieoberseite 21 der Straßenbaumaschine 1. Das Seitenwandunterteil 12 erstreckt sich somit in Wetterschutzstellung an keiner Stelle in Vertikalrichtung bis zur Dachwand 7.

Bei dem Seitenwandunterteil 12 kann es sich um mehrere Einzelwandplattensegmente 18 handeln, die in die Quer- und Längsstreben umfassende Tragstruktur eines Geländers 14 eingefasst sind und von diesem gehalten werden. Teil des Seitenwandunterteils 12 kann eine Zugangstür 12' sein, die zwischen einer Offenposition und der in den Figuren gezeigten Geschlossenposition verstellbar ist.

Das Seitenwandunterteil 12 ist, zumindest während einer Verstellung der Wetterschutzeinrichtung 6 zwischen der Wetterschutzstellung und der Staustellung, ortsfest relativ zum Maschinenrahmen 3. Dies bedeutet mit anderen Worten, dass zumindest bei dem gezeigten Ausführungsbeispiel bei einer Verstellung der Wetterschutzeinrichtung 6 zwischen der Wetterschutzstellung und der Staustellung die Position bzw. Relativlage des Seitenwandunterteils 12 gegenüber dem Maschinenrahmen 3 nicht verändert wird.

Das Seitenwandoberteil 11 kann als im Wesentlichen plane Wandplatte 15 ausgebildet sein, die an der Dachwand 9 aufgehängt ist und sich in Vertikalrichtung von oben von der Dachwand 9 kommend in Richtung zum Fahrstandboden hin nach unten erstreckt. Im vorliegenden Ausführungsbeispiel erstreckt sich das Seitenwandoberteil 11 soweit in Vertikalrichtung nach unten, dass es die Oberkante 17 mit einem Überlappungsbereich 13 in Richtung W vom Fahrstand 2 aus gesehen nach außen hin überlappt, wobei sich allerdings auch der Seitenwandoberteil nur über etwas mehr als die Hälfte er maximalen Höhe der seitlichen Öffnung im Fahrstand 2 erstreckt. Im Überlappungsbereich 13 weist die Wandplatte 15 einen in Richtung nach außen abgewinkelten Übergriffkragen 16 auf, der einen gegenüber der in Vertikalrichtung darüberliegenden Hauptfläche weiter nach außen vorstehenden Anlagebereich umfasst, in dem das Seitenwandoberteil 11 direkt am Seitenwandunterteil 12 anliegen kann.

Zusammen mit dem Seitenwandunterteil 12 bildet das Seitenwandoberteil 11 somit eine sich insgesamt vollständig vom Fahrstandboden in Vertikalrichtung hin zur Dachwand 7 erstreckende Seitenwand 10 mit einer insgesamt praktisch durchgehenden Außenwandfläche. Insgesamt kann auf diese Weise im Zusammenwirken mit dem Boden des Fahrstandes 5 und den weiteren Wandelementen Dachwand 7, Frontwand 8, Heckwand 9 und den beiden durch je ein Seitenwandoberteil 11 und einen Seitenwandunterteil 12 gebildeten Seitenwänden 10 auf der rechten und auf der linken Seite des Fahrstandes 5 ein verhältnismäßig umfassend mit Wandelementen umgebener und damit eine fast kabinenartige Gesamtstruktur erhalten werden, die auf günstige Weise einen guten Wetterschutz ermöglicht. Dabei ist wichtig, dass diese Wetterschutzstruktur im Gegensatz zu einer Kabine gerade nicht praktisch dicht gegenüber der Außenumgebung ist. Die Fig. 2A verdeutlich beispielweise, dass ein vergleichsweise großer Freiraum 28 vorhanden sein kann, der von dem Seitenwandoberteil 11 nicht abgedeckt wird. Es können auch Lösungen vorgesehen sein, bei denen diese Öffnungen durch weitere Wandsegmente ebenfalls abgedeckt werden können und/oder die wahlweise abdeckbar sind, beispielsweise durch ein Verschieben des Wandoberteils 11 in Pfeilrichtung s an der Dachwand 7.

Die insgesamt als Seitenwand 10 zusammenwirkende Gesamtstruktur aus Seitenwandoberteil 11 und Seitenwandunterteil 12 wird bei einer Verstellung der Wetterschutzeinrichtung aus der Wetterschutzstellung in die Staustellung nun allerdings zergliedert, wie in den Figuren 1B und 2B gezeigt. Die Wetterschutzeinrichtung ist mithilfe einer nicht im Detail dargestellten Schwenkeinrichtung 19 mit beispielsweise mehreren Lagerholmen verstellbar, insbesondere verschwenkbar, gegenüber dem Maschinenrahmen 3, im vorliegenden Ausführungsbeispiel beispielsweise in Vorwärtsrichtung V nach vom mit der Dachwand 7 bis auf die Karosserieoberseite absenkbar. Bei dieser Schwenkbewegung nimmt die Dachwand 7 die beiden Seitenwandoberteile 11 mit, die somit relativ zu den Seitenwandunterteilen in Vorwärtsrichtung V nach von und in Vertikalrichtung nach unten verlagert werden. Auch wenn hier verschiedene Bewegungsarten möglich sind, hat sich die im Ausführungsbeispiel gezeigte translatorische Verstellbewegung als besonders vorteilhaft erwiesen. Befanden sich das Seitenwandoberteil 11 und das Seitenwandunterteil 12 in der Wetterschutzstellung somit im Wesentlichen in Vertikalrichtung übereinander, befinden sie sich in der Staustellung im vorliegenden Ausführungsbeispiel im Wesentlichen auf gleicher Höhe. Die Gesamtheit aus Dachwand 7 und den beiden Seitenwandoberteilen 11 umgreift dabei einen in Vorwärtsrichtung V vor dem Fahrstand liegenden Bereich der Karosserie der Straßenbaumaschine 1. Die Dachwand 7 und, je nach Ausführungsform auch die Seitenwandoberteile 11, erstrecken sich dabei in Maschinenlängsrichtung V von Fahrstand 5 aus gesehen bis über die vorderen Hubeinrichtungen. Die Straßenbaumaschine 1 ist in der Staustellung daher bezüglich ihrer maximalen Erstreckung in Vertikalrichtung auch signifikant flacher. Gleichzeitig ändert sich die maximale Erstreckung der Straßenbaumaschine 1 in Vorwärtsrichtung bzw. ihre Längserstreckung nicht.

Die maximale Erstreckung der Seitenwandoberteile 11 von der Dachwand 7 in Vertikalrichtung nach unten reicht allerdings nur soweit, dass sie nicht über eine Unterseite 22 der Straßenbaumaschine 1 von oben kommend überstehen bzw. in Vertikalrichtung nach unten überstandsfrei gegenüber der Unterseite 22 der Straßenbaumaschine 1 sind, wie beispielsweise aus der Fig. 1B ersichtlich.

Die Figuren 1B und 2B verdeutlichen ferner, dass auch dadurch, dass die Seitenwandunterteile 12 ortsfest am Maschinenrahmen 3 positioniert sind, im Zusammenwirken mit der Heckwand 9 und Bereichen der Dachwand 7 insgesamt auch in der Staustellung eine räumliche Abgrenzung des in dieser Position deutlich verkleinerten Innenraums des Fahrstandes 5 erhalten wird, die zwar eine Bedienung der Straßenbaumaschine 1 aus dem Fahrstand 5 heraus praktisch unmöglich macht, dafür aber einen wirksamen Vandalismusschutz für den Innenraum des Fahrstandes 5 bildet, in dem häufig beispielsweise ein oder mehrere Fahrersitze, Kameras, Bedienelemente etc. untergebracht sein können.

Sowohl das Seitenwandoberteil 11 als auch das Seitenwandunterteil 12 bestehen vorliegend aus einem transparenten Material, insbesondere einem Kunststoffmaterial, so dass ein innerhalb der Fahrstandes 5 befindlicher Bediener durch das Seitenwandoberteil 11 und durch das Seitenwandunterteil 12 hindurch nach außen blicken kann.

Es können ferner eine oder mehrere Arretiervorrichtungen 23 vorgesehen sein, mit denen das Seitenwandoberteil 11 und/oder das Seitenwandunterteil 12 aneinander (wie in der Fig. 2A gezeigt) und/oder an anderen Teilen der Straßenbaumaschine 1 fixiert werden können, insbesondere werkzeugfrei lösbar fixiert.

Im Fahrstandinneren kann ferner eine Gebläseeinrichtung 24 vorgesehen sein, beispielsweise als Teil einer Klimaanlage, mit deren Hilfe ein Luftstrom in den Fahrstandinnenraum hinein erzeugt werden kann. Auf diese Weise kann ein Innendruck im Fahrstandinnenraum erzeugt werden, um beispielsweise das Eindringen von Staub von außerhalb der Fahrstandes zu vermindern oder gar zu verhindern.

## Patentansprüche

1. Selbstfahrende Straßenbaumaschine (1), insbesondere Bodenfräsmaschine, umfassend
- einen Antriebsaggregat (2),
- einen Maschinenrahmen (3),
- mit dem Maschinenrahmen (3) verbundene vordere und hintere Fahreinrichtungen (4),
- sowie einen Fahrstand (5) mit einer Wetterschutzeinrichtung (6),
- die Wetterschutzeinrichtung (6) umfassend eine Dachwand (7), eine Frontwand (8), eine Heckwand (9) sowie zwei einander gegenüberliegende Seitenwände (10),
- wobei die Wetterschutzeinrichtung (6) zwischen einer Staustellung und einer Wetterschutzstellung verstellbar ist,
**dadurch gekennzeichnet,**
**dass** die Seitenwände (10) jeweils ein in der Wetterschutzstellung gemeinsam eine Seitenwand (10) bildendes Seitenwandoberteil (11) und Seitenwandunterteil (12) umfassen, und dass das Seitenwandoberteil (11) und das Seitenwandunterteil (12) einer Seitenwand (10) in der Staustellung gegenüber ihrer Relativlage in der Wetterschutzstellung zueinander verlagert sind.

2. Straßenbaumaschine (1) gemäß Anspruch 1,
**dadurch gekennzeichnet,**
**dass** das Seitenwandoberteil (11) und das Seitenwandunterteil (12) einander in der Wetterschutzstellung in einem Überlappungsbereich (13) überlappen.

3. Straßenbaumaschine (1) gemäß einem der vorhergehenden Ansprüche,
**dadurch gekennzeichnet,**
**dass** das Seitenwandunterteil (12) bei einer Verstellung der Wetterschutzeinrichtung (6) zwischen der Wetterschutzstellung und der Staustellung ortsfest gegenüber dem Maschinenrahmen (3) ist.

4. Straßenbaumaschine (1) gemäß einem der vorhergehenden Ansprüche,
**dadurch gekennzeichnet,**
**dass** der Fahrstand (5) ein Geländer (14) umfasst, und dass das Seitenwandunterteil (12) am Geländer (14) angeordnet ist.

5. Straßenbaumaschine (1) gemäß einem der vorhergehenden Ansprüche,
**dadurch gekennzeichnet,**
**dass** das Seitenwandoberteil (11) wenigstens teilweise aus einem flexiblen Material besteht und in der Staustellung wenigstens teilweise gegenüber der Wetterschutzposition eingerollt und/oder gefaltet ist.

6. Straßenbaumaschine (1) gemäß einem der vorhergehenden Ansprüche,
**dadurch gekennzeichnet,**
**dass** das Seitenwandoberteil (11) wenigstens teilweise aus einem starren/formstabilen Material besteht.

7. Straßenbaumaschine (1) gemäß einem der vorhergehenden Ansprüche,
**dadurch gekennzeichnet,**
**dass** das Seitenwandoberteil (11) als eine an der Dachwand (7) aufgehängte Wandplatte (15) ausgebildet ist.

8. Straßenbaumaschine (1) gemäß einem der vorhergehenden Ansprüche,
**dadurch gekennzeichnet,**
**dass** das Seitenwandoberteil (11) in der Wetterschutzstellung verstellbar, insbesondere verschiebbar, an der Dachwand (7) angeordnet ist.

9. Straßenbaumaschine (1) gemäß einem der vorhergehenden Ansprüche,
**dadurch gekennzeichnet,**
**dass** die Wandplatte (15) einen gegenüber einer Hauptwandfläche zur Außenseite vorstehenden Übergriffkragen (16) aufweist, der in der Wetterschutzstellung einer Oberkante (17) des Seitenwandunterteils (10) übergreift.

10. Straßenbaumaschine (1) gemäß einem der vorhergehenden Ansprüche,
**dadurch gekennzeichnet,**
**dass** das Seitenwandoberteil (11) und/oder das Seitenwandunterteil (12) aus einem transparenten Material bestehen.

11. Straßenbaumaschine (1) gemäß einem der vorhergehenden Ansprüche,
**dadurch gekennzeichnet,**
**dass** die Wetterschutzeinrichtung (6) den Fahrstand (5) in der Wetterschutzstellung vollständig einhaust.

12. Straßenbaumaschine (1) gemäß einem der vorhergehenden Ansprüche,
**dadurch gekennzeichnet,**
**dass** das Seitenwandoberteil (11) und/oder das Seitenwandunterteil (12) aus mehreren relativ zueinander verstellbaren Wandsegmenten (18) bestehen.

13. Straßenbaumaschine (1) gemäß einem der vorhergehenden Ansprüche,
**dadurch gekennzeichnet,**
**dass** die Dachwand (7) mittels einer Schwenkeinrichtung (19) von der Wetterschutzstellung in die Staustellung verschwenkbar ist derart, dass sie in der Staustellung auf einer Karosserieoberseite (21) der Straßenbaumaschine (1) aufliegt, wobei die Dachwand (7) in der Staustellung soweit in oder entgegen einer Längserstreckung der Straßenbaumaschine (1) verlagert ist, dass an der Dachwand (7) angeordnete Seitenoberwandteile (11) Hubeinrichtungen (25) vorderer oder hinterer Fahreinrichtungen (4) wenigstens teilweise in Längserstreckungsrichtung der Straßenbaumaschine (1) teilweise und insbesondere vollständig überragen.

14. Straßenbaumaschine (1) gemäß einem der vorhergehenden Ansprüche,
**dadurch gekennzeichnet,**
**dass** die Dachwand (7) mittels einer Schwenkeinrichtung (19) von der Wetterschutzstellung in die Staustellung in oder entgegen einer Längserstreckung der Straßenbaumaschine (1) verschwenkbar ist derart, dass sie in der Staustellung auf einer Karosserieoberseite (21) der Straßenbaumaschine (1) aufliegt, wobei an der Dachwand (7) angeordnete Seitenoberwandteile (11) Seitenwandbereiche der Karosserieseitenwände der Straßenbaumaschine (1) quer zu einer Längserstreckungsrichtung der Straßenbaumaschine (1) überlappen.

15. Straßenbaumaschine (1) gemäß einem der vorhergehenden Ansprüche,
**dadurch gekennzeichnet,**
**dass** die Seitenwandoberteile (11) in der Staustellung in Vertikalrichtung (H) nach unten gesehen mit ihrer Unterkante überstandfrei gegenüber der Unterseite (22) der übrigen Straßenbaumaschine (1) sind.

16. Straßenbaumaschine (1) gemäß einem der vorhergehenden Ansprüche,
**dadurch gekennzeichnet,**
**dass** eine Arretiervorrichtung (23) vorhanden ist, die das Seitenoberwandteil (11) lösbar, insbesondere am Seitenunterwandteil (12), in der Wetterschutzstellung und/oder in der Staustellung feststellt.

17. Straßenbaumaschine (1) gemäß einem der vorhergehenden Ansprüche,
**dadurch gekennzeichnet,**
**dass** der Fahrstand (5) eine Gebläseeinrichtung (24) umfasst, die derart ausgebildet ist, dass über sie angesaugte Außenumgebungsluft in den Innenraum des Fahrstands (5) ausblasbar ist.

18. Verfahren zum Bereitstellen einer Wetterschutzeinrichtung (6) einer Straßenbaumaschine (1), umfassend die Schritte
a) Verstellen einer Wetterschutzeinrichtung (6) aus einer Staustellung in eine Wetterschutzstellung,
b) Verstellen der Relativlage eines Seitenwandoberteils (11)s und eines Seitenwandunterteils (12) relativ zueinander zum Erhalt einer Seitenwand (10).
